# DEMANDE DE BREVET EUROPEEN

(11) **EP 2 194 701 A2**
(43) Date de publication de la demande: **09.06.2010**
(21) Numéro de dépôt: 09290873.0
(22) Date de dépôt: 19.11.2009
(51) Int. Cl.: H04N 1/04

(54) **Module de réglage dynamique de la longueur d'un chemin optique, chariot, capteur optique et dispositif de numérisation multifonctions équipés d'au moins un module tel que précité**

(30) Priorité: 03.12.2008 FR 0806773
(71) Demandeur: SAGEM COMMUNICATIONS SAS, 92500 Rueil Malmaison (FR)
(72) Inventeur: Imbert, Nicolas, 78400 Chatou (FR)
(74) Mandataire: Lavialle, Bruno François Stéphane

(57) **Abrégé**

La présente invention concerne un module de réglage dynamique de la longueur d'un chemin optique, un chariot, un capteur optique et un dispositif de numérisation multi-fonctions équipés d'au moins un tel module, selon l'invention le module de réglage dynamique de longueur d'un chemin optique comprend une première et une seconde série de miroirs (M1,M2) permettant la réalisation d'un chemin optique entre l'objet à numériser et le capteur optique (3) et des moyens de réglage (21) permettant de réduire ou d'augmenter la longueur du chemin optique dans le module

## Description

La présente invention concerne un module de réglage dynamique de la longueur d'un chemin optique, un chariot ou un capteur optique équipé d'un tel module ainsi qu'un dispositif de numérisation multifonctions équipé d'au moins un module de réglage dynamique afin de numériser successivement différentes sources.

Le module de réglage dynamique de la longueur d'un chemin optique de la présente invention sera particulièrement destiné à équiper des appareils de numérisation multifonctions pouvant assurer différentes tâches telles que des impressions, des numérisations ou encore des transmissions de documents, le chargement des documents s'effectuant en plaçant les documents dans un ou plusieurs chargeurs ou en les déposant sur une vitre permettant la lecture optique du document à plat.

Dans les dispositifs de numérisation multifonctions on retrouve un capteur optique permettant la lecture optique des documents, il s'agit soit d'un capteur optique disposé dans un chariot mobile, ledit chariot balayant la surface à numériser, soit d'un capteur optique fixe séparé du chariot mobile. Un des inconvénients du capteur optique disposé dans le chariot est qu'il est nécessaire de multiplier le nombre de modules optiques dans les appareils multifonctions qui présentent plusieurs circuits de chemin papier avec par exemple un chemin pour réaliser une lecture optique du recto d'un document en provenance du chargeur ou disposé sur la vitre de numérisation, un autre chemin pour le verso de tels documents et un dernier chemin pour la numérisation de la sortie de l'imprimante.

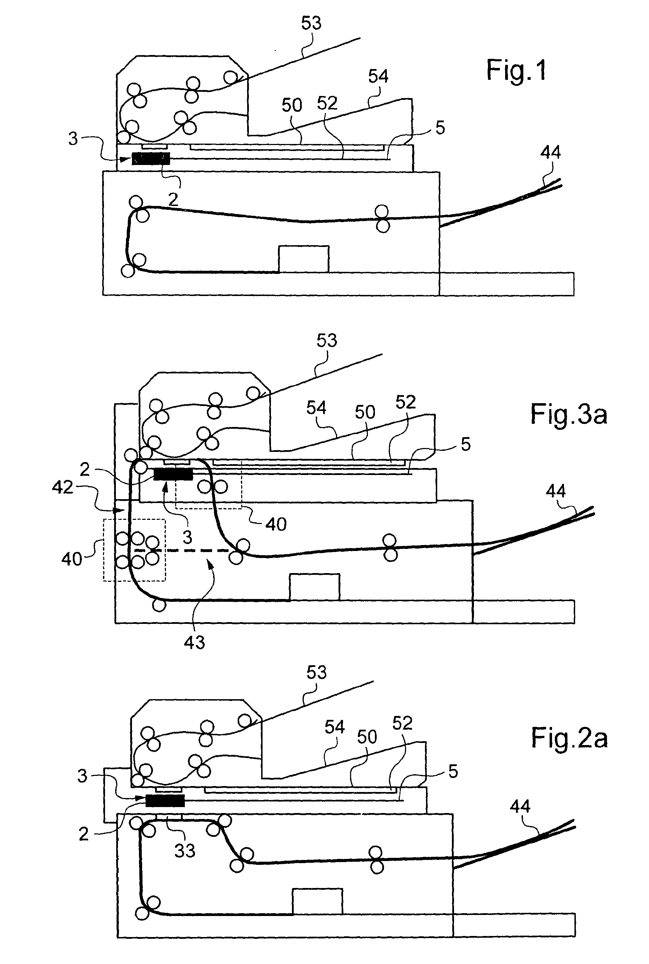

Classiquement, comme illustré dans la figure 1, les dispositifs de numérisation multifonctions comporte un capteur optique 3 placé dans un chariot 2 qui permet de le translater horizontalement au moyen d'une courroie 5, afin d'être en mesure de numériser, au choix, un document venant du scanner à chargement à travers la vitre 51 ou un document 60 disposé sur la vitre du scanner à défilement 52.

Si l'utilisateur utilise le scanner à chargement, le capteur optique se fixe sous la vitre du scanner à chargement 51. Les documents déposés au préalable dans l'introducteur du scanner à chargement 53, défilent alors à travers cette vitre 51 devant le capteur et leur face inférieure est numérisée. Ces documents sont ensuite éjectés dans le réceptacle de sortie du scanner 54.

Si l'utilisateur utilise le scanner à défilement, il dépose son document à scanner 60 sur la vitre du scanner à défilement 52, et le chariot translate alors le capteur à l'aide de la courroie 5 le long du document afin de numériser sa face inférieure.

Les 2 vitres 51 et 52 sont avantageusement d'épaisseur identique.

On constate donc que la numérisation par les dispositifs classiques ne concerne qu'une seule face du document, la face inférieure dirigée vers le capteur optique.

Le chariot optique est alors systématiquement accolé au document à numériser derrière une vitre d'épaisseur connue afin d'avoir un chemin optique séparant le document du capteur optique constante et correspondant à la mise au point du capteur, quelque soit la position du chariot.

Avec une telle architecture de chariot optique, il est nécessaire de disposer d'un autre capteur optique si l'on souhaite numériser la sortie de l'imprimante ou la partie verso d'un scanner à défilement qui sont physiquement inaccessibles pour le chariot.

Cette architecture empêche la réalisation de certaines fonctions qui amélioreraient le dispositif de numérisation. En effet, l'accès à la sortie de l'imprimante et à la partie verso d'un scanner à défilement par le même capteur que celui qui réalise déjà les numérisations de la partie scanner à chargement et la partie recto du document serait particulièrement intéressant. Notamment cet accès permettrait d'ajouter une fonction scan recto/verso du scanner à défilement et permettrait l'obtention d'informations intéressantes sur la qualité de la partie imprimante de ce dispositif.

Un capteur unique permettant d'accéder à la numérisation de ces quatre sources aurait comme inconvénient évident de rendre impossible la numérisation de façon simultanée. Cependant, une utilisation adéquate d'un tel dispositif multifonction autorisant la numérisation séquentielle de ces quatre sources avec un même capteur permettrait d'obtenir l'intégralité de la fonctionnalité recherchée sans souffrir de cette limitation de non simultanéité.

En effet, d'une part, l'acquisition du scanner à défilement par chariotage induit dans tous les systèmes existants un aller-retour d'un chariot. Il est alors judicieux de prévoir de scanner le recto pendant l'aller du chariot, et de scanner le verso pendant le retour du chariot. Le même capteur peut donc s'acquitter de cette tâche sans doubler le temps de la numérisation à plat qui reste inchangé pour la très grande majorité des utilisateurs qui ne récupèrent pas leur original avant la fin complète d'une numérisation de document à plat.

D'autre part, la numérisation de la sortie de l'imprimante a pour but de vérifier de façon périodique la qualité et peut donc fonctionner par prélèvement. Comme les dispositifs de numérisation multifonction sont le plus souvent utilisés en imprimante, la partie numérisation, alors inutilisée, peut être mise à profit dans ces moments là pour réaliser ces numérisations périodiques sans pénaliser l'utilisateur qui ne se rendra pas compte de l'opération. De plus, les documents imprimés par l'utilisateur peuvent eux-mêmes être utilisés comme mires de tests d'imprimante au moyen d'un algorithme adéquate.

Dans le cas très défavorable, où l'utilisateur ferait une utilisation continue et simultanée du dispositif d'impression et de numérisation, dans le cadre d'une copie locale par exemple, le système peut retarder la date du prélèvement afin de ne pas pénaliser l'utilisateur. Dans le cas d'un retard sur le prélèvement jugé « excessif » pour la procédure de vérification de la copie, le système reprend alors la main et bloque l'utilisateur le temps de numériser les impressions nécessaires à la vérification de la qualité.

Enfin dans le cas d'une numérisation de feuille imprimée jugée à posteriori mauvaise par le système, le dispositif prend les mesures nécessaires à la correction de la qualité (nettoyage de tête, alimentation en encre...) et peut également prévenir l'utilisateur d'une impression de qualité médiocre afin de lui proposer de recommencer après avoir corrigé la qualité.

Le dispositif peut aussi être en mesure de vérifier la qualité du document expressément à la demande de l'utilisateur sur son document si ce dernier veut s'assurer de la meilleure qualité possible.

Plusieurs solutions mécaniques peuvent être envisagées permettant de numériser les quatre sources afin d'en tirer les bénéfices décrits ci-dessus.

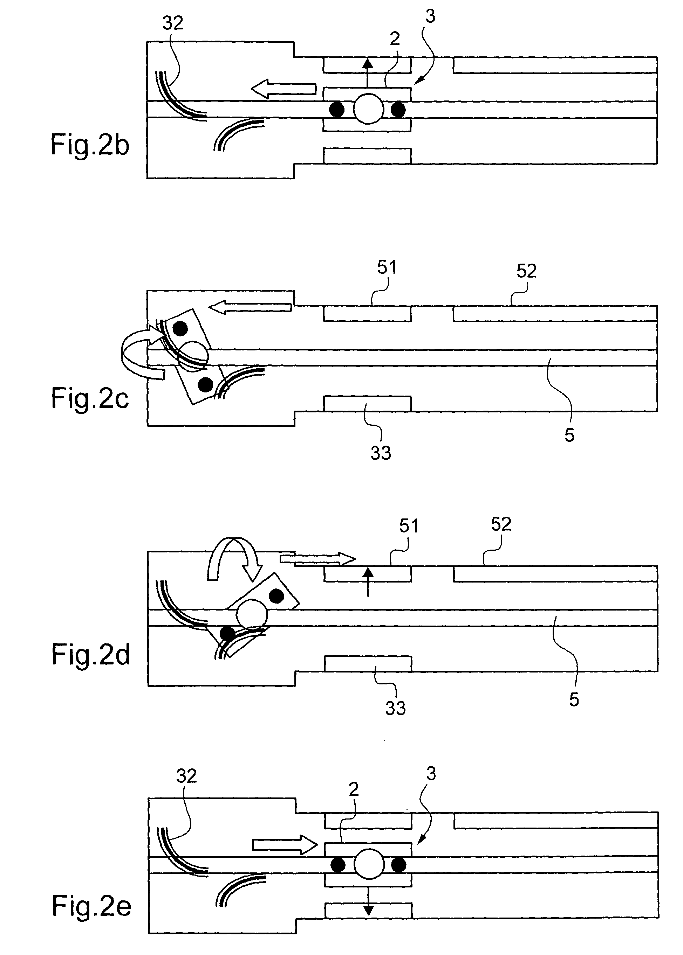

Une première solution, proposée par la demanderesse et illustrée par les figures 2a, 2b, 2c, 2d, 2^{e}, consiste à utiliser un chariot 2 avec un capteur pivotant 3 permettant de lire des documents empruntant des chemins différents en retournant le capteur. La mise au point du capteur optique 3 est alors identique lorsque le chariot 2 vise en direction du chemin papier du scanner à travers la vitre 51 ou du chemin papier de l'imprimante à travers la vitre 33. Il n'y a alors pas de mise au point complémentaire nécessaire. Le chemin papier de l'imprimante est aménagé afin de passer devant la vitre inférieure du chariot 33. Une zone de retournement 30 est également aménagée afin d'autoriser le basculement du bloc optique qui est généralement relativement plat et large.

Le retournement du bloc s'effectue dans cette zone sans l'intervention d'actionneur supplémentaire en utilisant simplement le mouvement de translation de la courroie 5 couplée à un dispositif à came 32 notamment du type « dispositif de retournement de balancelle ». Le bloc est retourné à l'aide de pion de guidage dans une came adaptée sans nécessité d'un actionneur supplémentaire comme illustré dans les figures 2b à 2e.

Cette solution demande la réalisation d'un système de pivot sur glissière, de plus, la nappe électronique nécessaire à tout capteur optique de ce type doit être en mesure de passer par la liaison pivot afin d'autoriser les retournements successifs. Cette solution, bien que nécessitant un temps de retournement du bloc optique est satisfaisante.

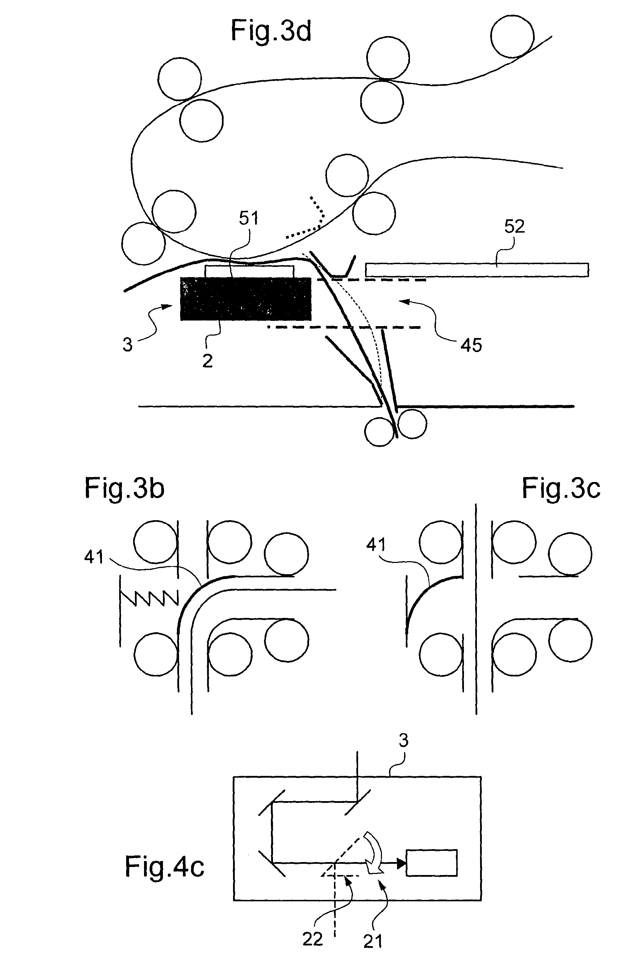

Une seconde solution, proposée par la demanderesse, et illustrée aux figures 3a, 3b, 3c et 3d consiste, non pas à déplacer le module optique devant le chemin papier, mais à amener la feuille imprimée devant le module optique. La solution est de dévier du chemin direct 43 la feuille imprimée afin de la faire passer dans un chemin bis 42 passant devant le capteur optique.

Afin de ne pas pénaliser de façon permanente l'utilisateur, le chemin direct de l'imprimante 43 ne passe pas devant le scanner afin de laisser la possibilité d'utiliser les deux dispositifs simultanément comme décrit précédemment. Lorsque le prélèvement doit être fait, un système d'aiguillage mécanique 40 permet d'emprunter un chemin qui passe alors par le scanner.

L'aiguillage est réalisé avantageusement par une pièce de chemin papier escamotable 41 en translation ou en rotation par un micro actionneur.

Au niveau du scanner, l'embranchement entre le chemin papier de l'imprimante et du scanner ne nécessite aucun dispositif dynamique compte tenu du sens de déplacement de la feuille. La feuille ainsi engagée dans la partie scanner est numérisée avant d'être éjectée au choix dans le réceptacle de sortie du scanner 54, ou d'être réintroduite dans un chemin bis de retour dans l'imprimante pour être éjectée dans le réceptacle de sortie de l'imprimante 44. Dans ce dernier cas, un aiguillage supplémentaire 40 illustré dans la figure 3d est prévu ainsi qu'un dispositif de guidage autorisant la feuille à traverser la zone 45 dans laquelle doit pouvoir librement translater le chariot 2.

Dans le cas du retour de la feuille dans le réceptacle de sortie du scanner 54, on prévoit, afin de ne pas perturber l'utilisateur, un prélèvement visant à éviter d'isoler une feuille dans un document volumineux, et au contraire mettre à profit les feuilles imprimées seules. Dans tous les cas, l'utilisateur est prévenu par le dispositif que son document original se trouve, non pas dans le réceptacle de sortie de l'imprimante 44 mais dans celui du scanner 54. Cette solution s'avère également satisfaisante.

La présente invention a pour but de pallier aux inconvénients précités et de proposer une solution dans laquelle le capteur optique est fixe et partagé entre plusieurs chariots mobiles ou points fixes.

A cette fin la présente invention propose un module de réglage dynamique de longueur optique ainsi qu'un chariot équipé de ce module et un dispositif de numérisation multifonctions équipé d'au moins un module destiné à coopérer avec un capteur optique dudit dispositif.

Selon l'invention le module de réglage dynamique comprend une première et une seconde série de miroirs (M1,M2) permettant la réalisation d'un chemin optique entre l'objet à numériser et le capteur optique et des moyens de réglage permettant de réduire ou d'augmenter le chemin optique dans le module.

Selon l'invention ledit chariot comporte des moyens de déplacement motorisés permettant l'entraînement du chariot selon un tracé donné, ledit chariot comprenant un module de réglage dynamique comportant :
- une première et une seconde série de miroirs permettant la réalisation d'un chemin optique entre l'objet à numériser et le capteur optique,
- des moyens d'écartement permettant de varier la distance entre les deux séries de miroirs et,
- des moyens de synchronisation entre les moyens de déplacement et les moyens d'écartement permettant de conserver une longueur du chemin optique sensiblement constante quelle que soit la position du chariot sur le tracé.

La structure du chariot permet par conséquent de maintenir en temps réel une longueur de chemin optique constante lors de son déplacement et par conséquent permet l'utilisation d'un capteur optique sans dispositif de correction de la longueur du chemin optique.

Selon une caractéristique de l'invention le chariot de numérisation comporte n miroirs pour chaque série de miroirs permettant la réalisation de N allers retour du chemin optique dans le chariot 2. Le choix du nombre de miroirs constitue un compromis, il ne doit pas être trop faible ce qui nécessiterait une course trop importante des deux séries de miroirs, ni trop grand ce qui multiplierait une éventuelle imprécision au niveau de l'écartement entre les deux séries de miroirs.

Selon une caractéristique avantageuse de l'invention les moyens de synchronisation comprennent un couplage entre les moyens de déplacement et les moyens d'écartement permettant un rapport de vitesse N constant entre les vitesses d'écartement des deux séries de miroirs et de déplacement du chariot. Cette disposition permet d'éviter toute dérive de réglage au cours du temps augmentant la qualité de la lecture optique.

La présente invention a également pour objet de proposer un dispositif de numérisation multifonctions avec un capteur optique fixe, deux chariots de numérisation et un miroir permettant de numériser un document disposé à plat en recto verso, un document en provenance d'un chargeur de document en recto et un document en provenance d'une imprimante en recto. Cette architecture permet notamment de comparer pour un même document, le document numérisé à partir de l'original avec une numérisation du document imprimé de manière à contrôler automatiquement d'éventuelles erreurs d'impression.

D'autres caractéristiques de l'invention apparaîtront clairement à la lecture de la description qui suit d'un mode de réalisation et de différentes variantes fournis à titre d'exemples non limitatifs.

Il sera fait référence aux figures annexées parmi lesquelles :
- la figure 1 représente selon une vue schématique la disposition classique d'un produit multifonction équipé d'une partie scanner et d'une partie imprimante mécaniquement dissociées,
- la figure 2a représente selon une vue schématique un exemple de nouvelle disposition d'un produit multifonction utilisant le dispositif du capteur pivotant,
- les figures 2b, 2c, 2d et 2e décrivent le processus de retournement du capteur pivotant,
- la figure 3a représente selon une vue schématique un exemple de nouvelle disposition d'un produit multifonction utilisant le dispositif d'aiguillages dans le chemin papier
- les figures 3b, 3c, et 3d décrivent un exemple de réalisation des 2 aiguillages,
- la figure 4a représente selon une vue schématique un exemple de nouvelle disposition d'un produit multifonction conforme à l'invention équipé de deux chariots mobiles intégrant des modules de réglage dynamique,
- la figure 4b représente selon une vue schématique un exemple de réalisation d'un chariot conforme à l'invention
- la figure 4c représente selon une vue schématique un deuxième exemple de réalisation d'un module de réglage dynamique,

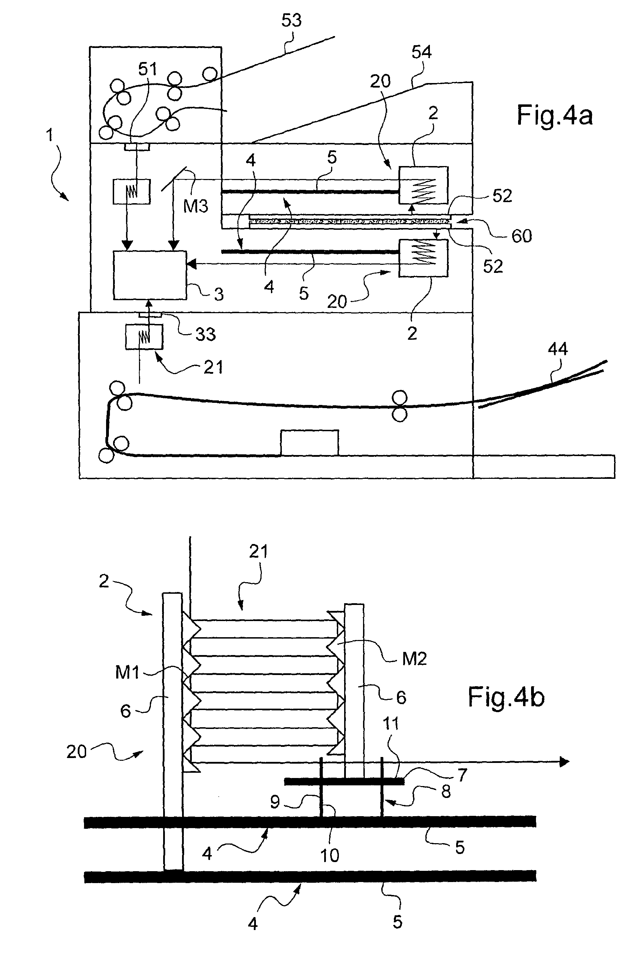

En se reportant aux figures 4a et 4b, on voit illustré un dispositif de numérisation 1 avec deux chariots 2, un capteur optique 3. Chaque chariot 2 comprend des moyens de déplacement motorisés 4 permettant le déplacement des chariots 2.

Avantageusement les moyens de déplacement motorisés 4 comprendront au moins une courroie crantée 5, un moteur (non représenté dans les dessins annexés) permettant l'entraînement de ladite courroie 5 et une liaison fixe entre la courroie 5 et le chariot 2.

En se reportant plus particulièrement à la figure 4b, on voit que le chariot 2 comprend un module de réglage dynamique 20 avec une première et une seconde série de miroirs respectivement M1 et M2 et des moyens de réglage 21.

Ces deux séries de miroirs M1 et M2 permettent la réalisation d'un chemin optique entre le capteur optique 3 et l'objet à numériser. Eventuellement en fonction de l'architecture du dispositif de numérisation 1 le chemin optique pourra également comporter un ou plusieurs miroirs supplémentaires M3 tel que représenté dans l'exemple de la figure 4a afin de définir un chemin optique vers le capteur optique 3.

De manière avantageuse les n miroirs d'une même série sont disposés entre eux selon un angle à 45°. Les miroirs d'une même série étant maintenus par des éléments de support 6.

Les moyens de réglage 21 comportent des moyens d'écartement 7 permettant de varier la distance entre les deux séries de miroirs M1 et M2. Ces moyens d'écartement 7 sont avantageusement reliés aux éléments de support 6 et permettent le déplacement d'une série de miroir par rapport à l'autre selon des plans parallèles. Dans l'exemple des figures 1 et 2 la série de miroirs M1 est fixe par rapport au chariot 2 et seule la série de miroirs M2 est mobile, entraînée par les moyens d'écartement 7.

La modification de l'écartement entre les séries de miroirs de M1 et M2 d'une distance 1 donnée permet soit d'augmenter soit de diminuer selon si respectivement les séries de miroirs M1 et M2 s'écartent ou se rapprochent l'une de l'autre la longueur du chemin optique dans le chariot 2 d'une longueur proportionnelle à 1 et au nombre d'allers retours N entre les deux séries de miroirs M1 et M2. Avantageusement le nombre d'allers retours N sera compris entre 5 et 15.

Le chariot 2 comprend également des moyens de synchronisation 8 entre les moyens de déplacement motorisés 4 et les moyens d'écartement 7 permettant de conserver une longueur de chemin optique sensiblement constante quelle que soit la position du chariot 2 sur son tracé.

Plus précisément lorsque les moyens de déplacement motorisés 4 entraînent le chariot 2 sur une distance 1 en direction du capteur optique 3, les moyens de synchronisation 8 permettent une action des moyens d'écartement 7 engendrant un écartement entre les deux séries de miroirs M1 et M2 d'une longueur l/N de telle sorte que la longueur totale du chemin optique reste constante.

A l'inverse lorsque les moyens de déplacement motorisés 4 entraînent le chariot 2 sur une distance 1 dans une direction opposée à celle du capteur optique, les moyens de synchronisation 8 permettent une action des moyens d'écartement 7 engendrant un rapprochement entre les deux séries de miroirs M1 et M2 d'une longueur 1/N de telle sorte que là encore la longueur totale du chemin optique reste constante.

Selon un mode de réalisation avantageux de l'invention les moyens de synchronisation 8 comprennent un couplage 9 entre les moyens de déplacement 4 et les moyens d'écartement 7 permettant un rapport de vitesse N constant entre les vitesses d'écartement des deux séries de miroirs M1 et M2 et de déplacement du chariot 2.

Dans l'exemple de la figure 4b les moyens de déplacement 4 et d'écartement 7 partagent une même motorisation, le couplage 9 permettant la synchronisation comprenant au moins un pignon 10 reliant la courroie d'entraînement 11 de la série de miroirs M2 à celle du chariot 2.

La structure du chariot 2 permet par conséquent de maintenir en temps réel une longueur de chemin optique constante lors de son déplacement et par conséquent permet l'utilisation d'un capteur optique 3 sans dispositif interne de correction de la longueur du chemin optique.

La structure du chariot 2 permet par conséquent d'imaginer des architectures inédites au niveau du dispositif de numérisation puisqu'il est possible de régler l'ensemble des chariots 2 sur une même longueur de chemin optique et donc de partager un capteur optique 3 sur l'ensemble des chariots 2 du dispositif de numérisation 1.

On voit ainsi à la figure 4a un dispositif de numérisation avec un seul capteur optique 4 multi-entrées sans dispositif interne de correction de la longueur optique partagé entre deux chariots 2 équipés de dispositif de réglage de longueur optique dynamique 20, le scanner à chargement et également une sortie imprimante au travers de dispositifs de réglage statiques 21 dont la distance entre les séries de miroirs est fixée. Cette architecture permet de numériser un document disposé à plat 60 en recto verso, un document en provenance d'un chargeur de document en recto et un document en provenance d'une imprimante en recto.

Le capteur optique multi-entrées est alors simplement un capteur optique classique auquel on ajoute un dispositif optique classique motorisé de type sextant permettant de sélectionner la source optique souhaitée ; toutes les sources décrites dans le dispositif 1 ont déjà la longueur de chemin optique adaptée grâce aux dispositifs de réglage décrits.

Il est également important de noter que cette architecture permet des fonctionnalités nouvelles et notamment permet pour un même document de réaliser automatiquement une numérisation du document original, une impression et une numérisation du document imprimé de manière à contrôler automatiquement d'éventuelles erreurs d'impression.

Bien entendu d'autres modes de réalisation, du chariot 2 et du dispositif de numérisation 1, à la portée de l'homme de l'art peuvent également être envisagés sans pour autant sortir du cadre de l'invention défini par les revendications ci-après.

A ce sujet dans d'autres modes de réalisation on pourra imaginer au niveau du chariot 2 un entraînement non pas d'une mais des deux séries de miroirs M1 et M2. Au niveau du dispositif de numérisation 1 on pourra également envisager des dispositifs 1 comportant un ou plusieurs chariots 2 avec des architectures variées.

Dans un autre mode de réalisation, le module de réglage dynamique 20 sera non pas intégré aux différents chariots mais au capteur optique 3 tel que représenté à la figure 4c. Pour obtenir un chemin de longueur constante on prévoit au niveau du capteur optique 3 des moyens de réglage 21 comportant des moyens de dérivation 22 permettant de diminuer ou d'augmenter la longueur du chemin optique dans le capteur pour obtenir une longueur de chemin optique totale constante.

Cette solution est particulièrement adaptée dans le cas où les différentes sources à viser sont déjà à la distance de mise au point du capteur optique fixe. Dans cette solution on retient avantageusement comme distance de mise au point optique, celle correspondant à la longueur du chemin géométrique le plus grand, à savoir généralement celui du chemin imprimante, et on ajoute dans tous les autres chemins géométriques des moyens de dérivation 22 permettant d'augmenter les autres chemins optiques afin que les longueurs totales des différents chemins optiques soient sensiblement égales.

## Revendications

1. Module de réglage dynamique de longueur d'un chemin optique **caractérisé en ce qu'**il comprend une première et une seconde série de miroirs (M1,M2), les miroirs d'une même série étant maintenus par un élément de support (6), permettant la réalisation d'un chemin optique entre l'objet à numériser et le capteur optique (3) et des moyens de réglage permettant de réduire ou d'augmenter la longueur du chemin optique dans le module.

2. Module de réglage dynamique selon la revendication 1 dans lequel les moyens de réglage comportent des moyens d'écartement (7) permettant de varier la distance entre les séries de miroirs (M1,M2).

3. Module de réglage dynamique selon la revendication 1 dans lequel les moyens de réglage comportent des moyens de dérivation permettant de réaliser au moins deux longueurs de chemin optique dans le module.

4. Chariot de numérisation équipé d'un module selon la revendication 2 destiné à coopérer avec un capteur optique (3) dans un dispositif de numérisation (1) comportant des moyens de déplacement motorisés (4) permettant l'entraînement du chariot selon un tracé donné dans lequel le chariot comprend un module (20) avec des moyens de synchronisation (8) entre les moyens de déplacement (4) et les moyens d'écartement (7) permettant de conserver une longueur du chemin optique sensiblement constante quelle que soit la position du chariot sur le tracé.

5. Chariot de numérisation selon la revendication 4 dans lequel les moyens d'écartement (7) permettent le déplacement d'au moins une série de miroirs selon des plans parallèles à l'autre série.

6. Chariot de numérisation selon la revendication 4 dans lequel une série de miroirs (M1) est fixe.

7. Chariot de numérisation selon la revendication 4 dans lequel chaque série de miroirs comporte un ensemble de miroirs disposés entre eux selon un angle à 45°.

8. Chariot de numérisation selon la revendication 4 dans lequel les moyens de synchronisation (8) comprennent un couplage (9) entre les moyens de déplacement (4) et les moyens d'écartement (7) permettant un rapport de vitesse N constant entre les vitesses d'écartement des deux séries de miroirs et de déplacement du chariot.

9. Chariot de numérisation selon la revendication 8 dans lequel les moyens de déplacement (4) et d'écartement (7) comportent une même motorisation, le couplage (9), permettant la synchronisation, comprenant au moins un pignon (10) reliant la courroie d'entraînement (11) d'au moins une série de miroirs à la courroie (5) du chariot.

10. Chariot de numérisation selon la revendication 4 comportant n miroirs pour chaque série de miroirs avec N allers et retours du chemin optique dans le chariot 2 permettant d'augmenter ou de réduire la longueur du chemin optique dans le chariot 2 d'une longueur 1*N respectivement en écartant ou en rapprochant les séries de miroirs M1 et M 2 entre elles d'une distance 1.

11. Chariot de numérisation selon la revendication 10 comportant N allers retours N étant compris entre 5 et 15.

12. Capteur optique équipé d'un module selon l'une quelconque des revendications 1 à 3.

13. Dispositif de numérisation équipé d'au moins un chariot (2) selon l'une quelconque des revendications 4 à 11 précitées.

14. Dispositif de numérisation selon la revendication 12 comportant un capteur optique fixe (3), deux chariots de numérisation (2) et un miroir (M3) permettant de numériser un document disposé à plat en recto verso, un document en provenance d'un chargeur de document en recto et un document en provenance d'une imprimante en recto.
